# FASCICULE DE BREVET EUROPEEN

(11) **EP 2 913 272 B1**
(45) Date de publication et mention de la délivrance du brevet: **24.08.2016**
(21) Numéro de dépôt: 15000305.1
(22) Date de dépôt: 03.02.2015
(51) Int. Cl.: B64D 15/00

(54) **Procédé et système de traitement du givre pour un parebrise d'un aéronef**
Verfahren und System zur Frostbehandlung für eine Windschutzscheibe eines Luftfahrzeugs
Frost treatment method and system for an aircraft windscreen

(30) Priorité: 26.02.2014 FR 1400490
(43) Date de publication de la demande: 02.09.2015
(73) Titulaire: Airbus Helicopters, 13725 Marignane Cedex (FR)
(72) Inventeur: Leschi, Robert, 13004 Marseille (FR); Catris, Stéphane, 13007 Marseille (FR); Balmain, Grégory, 13100 Aix en Provence (FR)
(74) Mandataire: GPI & Associés

(56) Documents cités:
- EP-A1- 1 405 742
- DE-A1- 10 003 590
- US-A1- 2008 223 842

## Description

La présente invention concerne un procédé et un dispositif de traitement du givre pour un parebrise d'un aéronef, et plus particulièrement d'un aéronef à voilure tournante.

La présente invention se rapporte donc au domaine technique du dégivrage du pare-brise d'un aéronef en cas de vol en conditions givrantes.

Les aéronefs et notamment les giravions peuvent évoluer dans des domaines de vol propices au givrage des parebrises. Ces giravions volent par exemple à des altitudes souvent inférieures à 10.000 pieds soit environ 3000 mètres.

Le givre est la cause de limitations opérationnelles dans l'aéronautique. En effet, le givre altère par exemple les performances des organes sustentateurs et propulsifs d'un aéronef, ou encore des systèmes de navigation.

De plus, le givre peut obscurcir un parebrise et donc réduire la visibilité d'un équipage.

Pour lutter contre le givrage d'un organe, deux méthodes peuvent être mises en oeuvre.

Une première méthode est une méthode dite « méthode d'antigivrage ». L'antigivrage consiste à traiter en continu un organe pour éviter la formation de givre en conditions givrantes.

Cette méthode d'antigivrage présente l'avantage d'éviter le dépôt de givre Par contre, cette méthode d'antigivrage présente l'inconvénient de nécessiter un besoin énergétique important compte tenu de son fonctionnement en continu.

La masse d'un dispositif d'antigivrage et sa consommation énergétique peuvent grever le bilan charge marchande / rayon d'action de l'aéronef, en particulier pour les hélicoptères où la capacité de charge marchande est très sensible à toute altération de masse à vide.

Une deuxième méthode est une méthode dite « méthode de dégivrage ».

Il est à noter que le terme « deicing » en langue anglaise est parfois utilisé de manière abusive pour qualifier non pas la méthode de dégivrage mais la méthode d'antigivrage.

La méthode de dégivrage consiste à accepter un dépôt de givre partiel et transitoire, puis à détruire ce dépôt.

En résumé l'antigivrage consiste à éviter la formation de givre, alors que le dégivrage consiste à éliminer un dépôt de givre.

Un système de dégivrage ne fonctionne donc pas en permanence durant un vol en conditions givrantes, mais seulement à partir du dépôt d'une certaine quantité de givre. Un tel système de dégivrage peut alors être dimensionné de façon à limiter les conséquences sur la masse à vide de l'appareil en contrepartie d'une efficacité relative.

Cependant, la méthode de dégivrage induit l'acceptation d'un dépôt de givre susceptible d'altérer de façon significative les performances de l'aéronef.

Par ailleurs, le fonctionnement d'un système d'antigivrage peut impliquer la consommation en continu d'une puissance électrique « modérée ». Au contraire, le fonctionnement d'un système de dégivrage peut impliquer la consommation de manière transitoire d'une puissance électrique élevée pour éliminer un dépôt de givre.

Or, la puissance électrique disponible en vol sur un aéronef est limitée. Dès lors, pour lutter contre le givre au niveau des parebrises et notamment des parebrises d'aéronefs, les techniques actuelles de protection consistent essentiellement à mettre en oeuvre une méthode d'antigivrage.

Les solutions techniques d'antigivrage d'un parebrise peuvent requérir l'intégration dans le pare-brise d'un film chauffant ou d'un réseau filaire. Des capteurs, répartis sur le parebrise, contrôlent alors la température de surface du parebrise, et déclenchent ou arrêtent la phase de chauffe en fonction des seuils de température atteints.

Sauf décision contraire de l'équipage, le système d'antigivrage d'un parebrise est activé en permanence lors de la mission, et donc avant, pendant, et après l'apparition de conditions givrantes.

Le document US 7928345 décrit un parebrise muni en son sein d'un revêtement résistif relié à une source électrique.

Le document GB 734772 suggère l'utilisation d'un gaz à base d'ammoniaque pour lutter contre le givre.

Le document US 2008/0223842 décrit un parebrise muni en son sein d'un revêtement résistif. Ce revêtement résistif est alimenté par un courant électrique à haute tension, résultant de la transformation d'un courant électrique à basse tension par le moyen de convertisseurs et d'onduleurs.

Ce document s'attache donc à augmenter la tension circulant sur un circuit électrique alimenté par une tension de 12 Volt, alors qu'un circuit électrique d'un système d'antigivrage d'hélicoptère fait classiquement appel à une tension de 200 Volts.

Le document US 2013/0048622 décrit un système projetant de l'air chaud sur une surface transparente.

On connaît aussi le document EP 1 405 742 et le document DE 100 03590.

La présente invention a alors pour objet de proposer un procédé alternatif pour lutter contre le givre sur au moins un parebrise d'aéronef, et notamment un giravion.

L'invention concerne donc un procédé de traitement du givre pour une verrière d'aéronef comportant au moins un parebrise, au cours duquel :
- on définit au moins deux zones de dégivrage distinctes du parebrise,
- durant une étape de dégivrage, on active temporairement au moins un moyen de dégivrage pour dégivrer lesdites zones de dégivrage successivement et selon un cycle donné d'importance pour la visibilité offerte à un équipage.

L'invention propose donc de dégivrer et non pas d'antigivrer au moins un pare-brise.

A cet effet, un parebrise est subdivisé en une pluralité de zones de dégivrage distinctes. Selon ce procédé, on dégivre une seule zone de dégivrage à la fois, en sélectionnant la zone de dégivrage à dégivrer selon un cycle donné.

De même, on peut diviser plusieurs parebrises d'une verrière en plusieurs zones de dégivrage que l'on dégivre l'une après l'autre selon un ordre déterminé, et notamment un ordre d'importance pour la visibilité d'un équipage.

Les parebrises couvrent individuellement une surface tendant à augmenter par rapport à certains aéronefs du passé. Dès lors, la puissance totale nécessaire pour antigivrer un parebrise selon une technique connue peut être élevée. A titre d'exemple, un parebrise de trois mètres carrés nécessitant une puissance électrique de 5 kW/m² pour réaliser une action d'antigivrage implique la fourniture d'une puissance de 15 kW.

L'invention propose d'utiliser une telle puissance non pas pour antigivrer en permanence le parebrise mais pour par exemple dégivrer partiellement et temporairement ce parebrise. En effet, une puissance de 15W permet à un moyen de dégivrage de dégivrer une zone de dégivrage restreinte d'un parebrise. Le dégivrage n'étant pas effectué en continu, l'invention peut permettre un gain d'énergie par rapport à un système d'antigivrage.

On décide par conséquent de chauffer certaines portions prédéfinies du parebrise à des températures beaucoup plus élevées que les températures nécessaires à un antigivrage classique. Ce procédé nécessitant une puissance élevée, on fait le choix de diminuer la puissance du système en réduisant la zone de dégivrage à chauffer. L'invention propose donc de diviser la surface du parebrise en plusieurs fenêtres que l'on dégivre l'une après l'autre selon un ordre déterminé, éventuellement par ordre d'importance pour la visibilité.

Le dégivrage peut par exemple s'effectuer soit par électrothermie, soit par induction, soit par émission laser, soit par infrarouge.

Par rapport à des solutions d'antigivrage, cette technologie peut présenter l'avantage de pouvoir être utilisée au moment où on en a besoin, par exemple lorsque l'aéronef sort des conditions givrantes ce qui permet de limiter la consommation électrique et son impact sur l'autonomie de vol de l'aéronef.

La mise en place d'une telle méthode de dégivrage sur un aéronef peut paraître surprenante. En effet, cette méthode suppose l'acceptation éventuelle d'un dépôt de givre, susceptible de dégrader la visibilité d'un pilote. Cependant, lorsqu'un giravion vole en conditions givrantes, ce giravion vole en conditions dites IMC soit « Instrument Meteorological Conditions » en langue anglaise. Le vol s'effectue à l'aide des instruments sans visibilité du fait des nuages, que le champ de vision soit obscurci ou non par du givre. L'invention va donc à l'encontre de préjugés, en considérant notamment que chauffer le pare-brise dans un nuage givrant n'est pas strictement nécessaire, même si l'équipage peut y trouver un intérêt afin de retrouver un pare-brise propre en sortie de telles conditions.

Ce procédé peut comporter une ou plusieurs des caractéristiques qui suivent.

Ainsi, l'étape de dégivrage peut être mise en oeuvre lorsque l'aéronef ne vole plus dans des conditions givrantes ou sur requête d'un pilote.

Durant un vol en conditions givrantes, la visibilité d'un pilote peut être restreinte, et justifier d'effectuer le vol aux instruments. Dès lors, le dépôt de givre peut avoir un impact limité sur une visibilité déjà limitée par les conditions de vol.

Par contre, l'opération de dégivrage peut commencer dès la sortie des conditions givrantes, et donc lorsque les conditions météorologiques deviennent plus favorables. Cette sortie peut être déterminée avec des moyens usuels, tels qu'un détecteur de givre. Cette sortie peut aussi être déterminée à l'aide de l'altitude de l'aéronef et d'organes météorologiques, ces organes météorologiques permettant d'estimer des données météorologiques incluant par exemple le plafond d'une couche nuageuse et la visibilité offerte à un pilote.

Selon une autre alternative, un pilote peut activer manuellement le dégivrage si besoin, voire peut déterminer le cycle de dégivrage à appliquer en fonction de ces besoins. Ce cycle vise à déterminer l'ordre de dégivrage en fonction de la visibilité que souhaite obtenir un équipage. Durant un vol en palier, un pilote peut privilégier en premier lieu une visibilité vers l'avant de l'aéronef. Par contre, un pilote peut privilégier une visibilité vers le dessous de l'aéronef durant une phase d'atterrissage.

Ainsi, l'activation du dégivrage peut se faire soit manuellement par un individu, soit automatiquement lorsque les instruments ont détecté que l'aéronef a quitté des conditions givrantes.

Contrairement à une méthode classique d'antigivrage permanent, ce procédé permet de ne pas réquisitionner de puissance pour le traitement du givre sur le parebrise en conditions givrantes, mais d'utiliser cette puissance essentiellement lors de la sortie de ces conditions givrantes. La puissance ainsi ciblée permet de dégivrer le parebrise. Une fois dégivré, le pare-brise peut éventuellement être soumis à un processus classique d'antigivrage pour lui permettre de rester propre.

Par ailleurs, l'aéronef s'étendant longitudinalement d'une extrémité avant vers une extrémité arrière, on peut définir sur au moins un parebrise au moins une zone de dégivrage dite « zone frontale » allouant à un pilote une visibilité vers l'avant de l'aéronef.

Par exemple, la verrière peut comporter une pluralité de parebrises, et notamment un parebrise dit « parebrise supérieur » en regard de la tête d'un pilote. Ce parebrise supérieur peut être partagé en une pluralité de zones frontales.

Le cycle donné peut alors privilégier en premier lieu le dégivrage des zones frontales l'une après l'autre pour privilégier la visibilité des pilotes vers l'avant.

Selon une première variante, l'aéronef s'étendant latéralement d'un côté gauche vers un côté droit et en élévation d'une portion basse vers une portion haute, on peut définir sur au moins un parebrise au moins une zone de dégivrage dite «zone latérale » allouant à un pilote une visibilité vers un côté de l'aéronef et / ou une zone de dégivrage dite « zone basse » du parebrise allouant à un pilote une visibilité vers le bas de l'aéronef.

Cette réalisation propose de dégivrer des zones très distinctes, en fonction éventuellement de priorités mémorisées et/ou déterminées par des pilotes.

Par exemple, la verrière peut comporter une pluralité de parebrises, et notamment un parebrise supérieur en regard de la tête d'un pilote ainsi qu'un parebrise dit « parebrise intermédiaire » et un parebrise dit « parebrise inférieur » situé au niveau des pieds d'un pilote. Ce parebrise supérieur est alors éventuellement partagé en une pluralité de zones frontales, le parebrise intermédiaire étant partagé en une pluralité de zones latérales et le parebrise inférieur étant partagé en une pluralité de zones basses.

On peut alors dégivrer les zones de dégivrage l'une après l'autre en commençant en premier lieu par les zones frontales, puis les zones latérales et enfin les zone basses.

Selon une deuxième variante, l'aéronef comportant un essuie-glace pouvant balayer un secteur angulaire total prédéterminé, on divise ce secteur angulaire total en une pluralité de secteurs angulaires restreints distincts définissant chacun une zone de dégivrage.

Outre un procédé, l'invention vise un dispositif mettant en oeuvre ce procédé.

L'invention concerne alors un dispositif de traitement du givre d'une verrière munie d'un parebrise d'un aéronef.

Le parebrise comportant au moins deux zones de dégivrage distinctes, le dispositif de traitement du givre comporte au moins un moyen de dégivrage et un système de détection de givre, le dispositif ayant une unité de contrôle communiquant avec ledit moyen de dégivrage pour dégivrer lesdites au moins deux zones de dégivrage successivement et selon un cycle donné d'importance pour la visibilité offerte à un équipage.

Chaque moyen de dégivrage peut être incorporé ou fixé à un parebrise. Par exemple, le dispositif comporte un moyen de dégivrage par zone de dégivrage.

Par contre, le système de détection de givre et/ou l'unité de contrôle peuvent être incorporés à un parebrise, fixés à un parebrise, ou être déportés en dehors des parebrises.

Le dégivrage peut par exemple s'effectuer avec un moyen de dégivrage fonctionnant soit par électrothermie, soit par induction, soit par émission laser, soit par infrarouge.

Chaque moyen de dégivrage peut être disposé sur le parebrise, au sein du parebrise, ou encore sur un essuie-glace par exemple.

Selon une première réalisation, le dispositif de traitement du givre comporte au moins deux moyens de dégivrage respectivement pour dégivrer des zones de dégivrage distinctes, ladite unité de contrôle activant les deux moyens de dégivrage l'un après l'autre.

L'aéronef s'étendant longitudinalement d'une extrémité avant vers une extrémité arrière, lesdits au moins deux moyens de dégivrage peuvent comporter au moins un moyen de dégivrage frontal disposé au niveau d'une zone de dégivrage dite «zone frontale »d'au moins un parebrise allouant à un pilote une visibilité vers l'avant de l'aéronef, l'unité de contrôle activant en premier lieu ce moyen de dégivrage frontal en cas de détection de givre.

L'expression « disposé au niveau de » signifie que le moyen de dégivrage est agencé sur ou au sein du parebrise pour couvrir la zone de dégivrage concernée.

L'aéronef s'étendant latéralement d'un côté gauche vers un côté droit et en élévation d'une portion basse vers une portion haute, au moins deux moyens de dégivrage peuvent comporter au moins un moyen de dégivrage latéral disposé au niveau d'une zone de dégivrage dite «zone latérale » d'au moins un parebrise allouant à un pilote une visibilité vers un côté de l'aéronef et / ou au moins un moyen de dégivrage inférieur disposé au niveau d'au moins une zone de dégivrage dite « zone basse »du parebrise allouant à un pilote une visibilité vers le bas de l'aéronef.

Par exemple, trois moyens de dégivrage visent à dégivrer respectivement et l'un après l'autre une zone frontale, une zone latérale et une zone basse du parebrise.

Selon une deuxième réalisation, le dispositif de traitement du givre comporte un essuie-glace portant un moyen de dégivrage, ledit essuie-glace pouvant balayer un secteur angulaire total prédéterminé, ledit secteur angulaire total incluant une pluralité de secteurs angulaires restreints distincts définissant chacun une zone de dégivrage, ladite unité de contrôle activant ledit essuie-glace pour balayer un seul secteur angulaire restreint à la fois afin de dégivrer partiellement ledit parebrise.

Le moyen de dégivrage est alors couplé à l'essuie-glace. La position de l'essuie-glace sur le pare-brise pilote alors la zone de dégivrage à chauffer. De plus, l'essuie-glace peut permettre d'évacuer le givre après dégivrage.

En outre, le secteur angulaire total s'étendant éventuellement angulairement et de bas en haut selon une direction en élévation du parebrise d'un premier secteur angulaire restreint inférieur vers un dernier secteur angulaire restreint supérieur, l'unité de contrôle requiert le dégivrage successif des secteurs angulaires restreints selon un cycle prédéterminé en commençant par le premier secteur angulaire restreint inférieur pour finir par le dernier secteur angulaire restreint supérieur.

Les termes « bas » et « haut » font référence à une direction en élévation allant d'une partie basse de l'aéronef vers une partie haute portant un rotor.

Compte tenu du flux aérodynamique d'air impactant le parebrise en vol, le dégivrage s'effectue selon un cycle consistant à dégivrer en priorité la zone de dégivrage la plus basse pour une meilleure évacuation du givre.

Selon une troisième réalisation, le dispositif de traitement du givre comporte au moins deux moyens de dégivrage respectivement pour dégivrer deux zone de dégivrage distinctes, ladite unité de contrôle activant en présence de givre un unique moyen de dégivrage à la fois pour décoller le givre et requérant le balayage dudit essuie-glace pour évacuer le givre décollé.

Cette variante consiste à dégivrer les zones de dégivrage prédéterminées de manière impulsive et puissante pour décoller le givre à l'interface avec la surface vitrée du parebrise, puis de faciliter l'évacuation du givre captée par l'action mécanique de l'essuie-glace.

Par exemple, chaque moyen de dégivrage fonctionne suite à une impulsion électrique fournie par un système de stockage d'énergie basse tension, de type condensateur alimenté en 28VDC par exemple, capable de restituer cette énergie en un temps relativement court et à forte tension.

L'unité de traitement couple cette partie énergétique avec le contrôle de l'essuie-glace.

Par exemple, le dispositif de traitement du givre comporte un système de mesure de la température, l'unité de contrôle requérant le balayage de l'essuie-glace pour évacuer le givre décollé à partir d'une température seuil. Le contrôle de l'essuie-glace est donc réalisé à partir d'une information de température de surface provenant de la surface vitrée du parebrise.

Par ailleurs, le dispositif de traitement du givre peut comporter un organe de sélection relié à l'unité de contrôle et manipulable par un individu pour définir ledit cycle donné. Un tel organe de sélection peut aussi permettre l'arrêt ou le fonctionnement du dispositif de traitement du givre.

En outre, l'invention vise aussi un aéronef muni d'au moins un parebrise, cet aéronef comportant au moins un dispositif de traitement du givre pour lutter contre un dépôt de givre sur ce parebrise.

L'invention et ses avantages apparaîtront avec plus de détails dans le cadre de la description qui suit avec des exemples donnés à titre illustratif en référence aux figures annexées qui représentent :
- la figure 1, une vue schématique d'un aéronef muni d'un dispositif de traitement du givre,
- la figure 2, une vue d'un dispositif de traitement du givre selon une première réalisation,
- la figure 3, une vue d'un dispositif de traitement du givre selon une deuxième réalisation,
- la figure 4, une vue d'un dispositif de traitement du givre selon une troisième réalisation, et
- la figure 5, une vue d'une verrière comportant une pluralité de parebrises en vis-à-vis d'un pilote et d'un copilote.

Les éléments présents dans plusieurs figures distinctes sont affectés d'une seule et même référence.

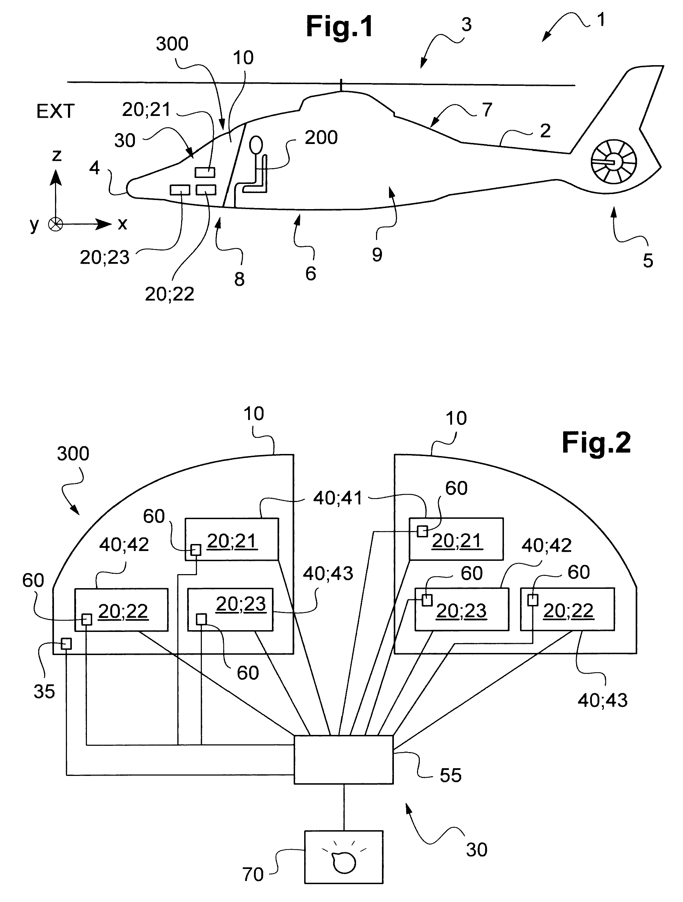

On note que trois directions X, Y et Z orthogonales les unes par rapport aux autres sont représentées sur la figure 1.

La première direction X est dite longitudinale. La deuxième direction Y est dite transversale. Enfin, la troisième direction Z est dite en élévation.

La figure 1 présente un aéronef 1 selon l'invention.

Cet aéronef 1 est muni d'un fuselage 2 s'étendant longitudinalement d'une extrémité avant 4 vers une extrémité arrière 5, et transversalement d'un côté gauche 9 vers un côté droit 8.

De plus, le fuselage 2 s'étend en élévation d'une partie basse 6 vers une partie haute 7. Sur un giravion, la partie haute est surmontée d'un rotor 3 de sustentation voire de propulsion.

Cet aéronef 1 comprend en outre une cabine délimitée par une verrière 300 comprenant au moins un parebrise 10. Un individu 200 assis dans cette cabine peut alors visualiser le milieu extérieur EXT à l'aéronef au travers de chaque parebrise 10. Un parebrise comprend à cet effet usuellement une surface transparente à la lumière visible.

Durant un vol dans des conditions givrantes, du givre est susceptible de d'adhérer aux parebrises. Lorsque ces conditions givrantes disparaissent, ce givre est de nature à limiter la visibilité d'un individu vers le milieu extérieur EXT.

Par suite, l'aéronef est muni d'un dispositif de traitement du givre, dénommé plus simplement dispositif 30 par la suite.

Selon le procédé appliqué, un constructeur définit pour au moins un parebrise au moins deux zones de dégivrages 20 distinctes. Chaque zone de dégivrage couvre alors une surface restreinte d'un parebrise.

Durant une étape de dégivrage, on dégivre successivement et selon un cycle donné les zones de dégivrage 20 à l'aide d'au moins un moyen de dégivrage. Les zones de dégivrage 20 sont alors dégivrées non pas simultanément mais l'une après l'autre, et plus particulièrement selon un cycle établi en fonction de la visibilité privilégié par un pilote.

Cette étape de dégivrage peut par exemple être mise en oeuvre à l'issue d'une phase de vol en conditions givrantes, ou encore suite à une requête volontaire d'un individu.

Les figures 2 à 5 illustrent des modes de réalisation du dispositif 30 permettant de mettre en oeuvre ce procédé.

Indépendamment de la réalisation et en référence à la figure 2, le dispositif 30 est muni d'au moins un moyen de dégivrage 40 apte à dégivrer une surface. La figure 2 illustre un aéronef muni d'une verrière comprenant deux parebrises équipés chacun de plusieurs moyens de dégivrage.

Chaque moyen de dégivrage 40 peut par exemple être alimenté en énergie électrique par une batterie non représentée.

De plus, le dispositif 30 est pourvu d'une unité de contrôle 55 relié à chaque moyen de dégivrage 40. L'unité de contrôle 55 peut par exemple comprendre un circuit électronique, et/ou encore un organe de calcul tel qu'un processeur exécutant des instructions mémorisées dans une mémoire non volatile.

Cette unité de contrôle 55 est en outre reliée à un système de détection de givre 35. Ce système de détection de givre 35 peut comprendre un capteur de givre, un moyen de mesure de température ou encore au moins un organe recevant des données notamment météorologiques permettant de déterminer qu'un aéronef effectue un vol dans des conditions givrantes.

L'unité de contrôle 55 peut en outre communiquer avec au moins un système 60 de mesure de température mesurant la température du parebrise, sur une face en relation avec le milieu extérieur de l'aéronef par exemple. Par exemple, chaque zone du parebrise dégivrée par un moyen d'antigivrage est munie d'un système 60 de mesure de température.

Par ailleurs, le dispositif 30 peut comporter un organe de sélection 70 pour requérir le fonctionnement ou l'arrêt du processus de dégivrage, voire pour spécifier à l'unité de contrôle le cycle donné de dégivrage à appliquer. De manière alternative ou complémentaire, ce cycle de dégivrage peut être mémorisé dans l'unité de contrôle.

Selon la réalisation de la figure 2, le dispositif 30 est muni d'au moins deux moyens de dégivrage 40 par parebrise. Par exemple, le dispositif 3 comprend un moyen de dégivrage par zone de dégivrage.

Chaque moyen de dégivrage 40 peut être fixé sur le parebrise de manière à recouvrir la zone de dégivrage à traiter, ou encore peut être intégré dans le parebrise. Par exemple, chaque moyen de dégivrage est un moyen connu muni d'un tissu résistif s'étalant sur l'aire de la zone de dégivrage correspondante.

Chaque moyen de dégivrage est alors relié par une liaison filaire ou non filaire à l'unité de contrôle 55.

Par exemple, le dispositif 30 comporte au moins un moyen de dégivrage frontal 41 pour dégivrer une zone frontale 21, cette zone frontale allouant à un pilote une visibilité vers l'avant de l'aéronef.

De plus, le dispositif 30 peut inclure au moins un moyen de dégivrage latéral 42 pour dégivrer une zone latérale 22 du parebrise allouant à un pilote une visibilité vers un côté de l'aéronef.

Ce dispositif 30 peut en outre comprendre au moins un moyen de dégivrage inférieur 43 pour dégivrer une zone basse 23 du parebrise allouant à un pilote une visibilité vers le bas de l'aéronef.

Pour au moins un parebrise, le dispositif 30 comporte donc au moins deux des moyens de dégivrage pouvant être choisis dans la liste suivante : un moyen de dégivrage frontal, un moyen de dégivrage latéral, un moyen de dégivrage inférieur.

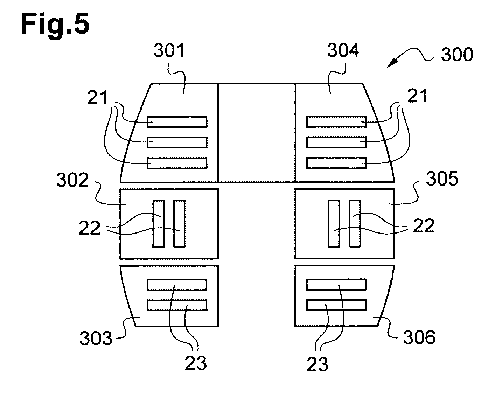

La figure 5 présente une verrière munie de deux parebrises supérieurs 301, 304, deux parebrises intermédiaires 302, 305 et deux parebrises inférieurs 303, 306 respectivement en vis à vis de la tête d'un buste et des pieds d'un pilote et d'un copilote.

Chaque parebrise supérieur 301, 304 comporte alors par exemple une pluralité de zones frontales 21. Chaque parebrise intermédiaire 302, 305 comporte une pluralité de zones latérales 22, et chaque parebrise inférieur 303, 306 comprend une pluralité de zones basses.

En référence à la figure 2, lorsque l'aéronef vole dans des conditions givrantes, l'unité de traitement peut inhiber les moyens de dégivrage. Le dégivrage n'est alors pas actif.

Par contre, lorsque l'aéronef sort des conditions givrantes, l'unité de traitement active les moyens de dégivrage l'un après l'autre pour dégivrer successivement les zones de dégivrage selon un cycle donné. Eventuellement, l'unité de traitement peut déterminer que l'aéronef sort des conditions givrantes à l'aide du système de détection de givre 35.

Durant l'étape de dégivrage, l'unité de traitement commande par exemple les moyens de dégivrage frontaux pour dégivrer les zones frontales l'une après l'autre uniquement, puis les moyens de dégivrages latéraux et enfin les moyens de dégivrage inférieurs. Ce cycle peut être mémorisé dans l'unité de traitement, ou encore peut résulter d'une commande transmise par l'organe de sélection 70.

L'unité de traitement peut cesser d'activer chaque moyen de dégivrage suite à un temps de fonctionnement donné, ou encore en fonction d'une information de température telle que la température du parebrise dans la zone de dégivrage par exemple.

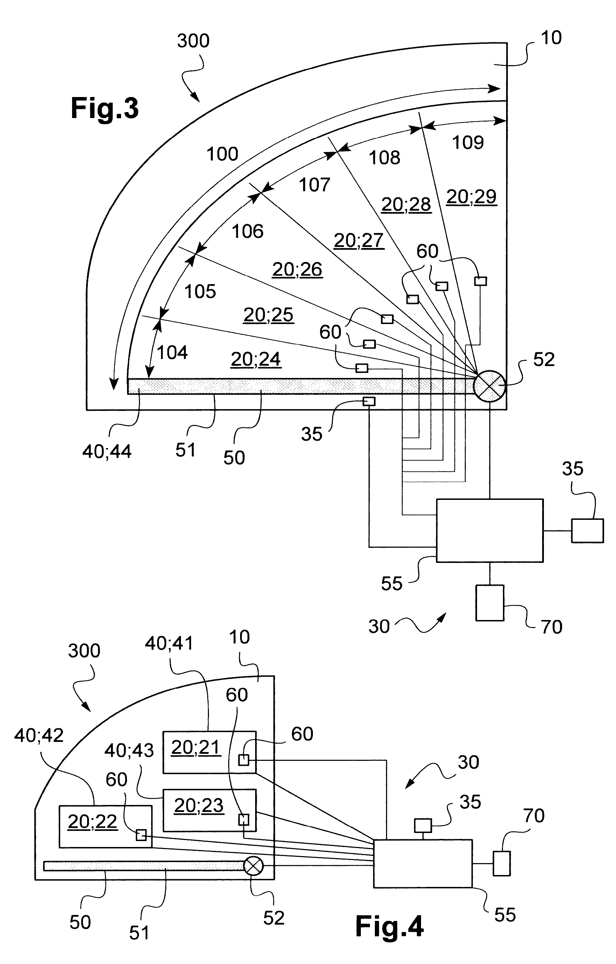

Selon les réalisations des figures 3 et 4, le dispositif de traitement du givre 30 comporte un essuie-glace 50. Cet essuie-glace est pourvu d'un balai 51 mis en mouvement par un moteur 52 pour balayer un secteur angulaire dit secteur angulaire total 100.

Selon la réalisation de la figure 3, le balai 51 porte un moyen de dégivrage 44. Par exemple, le balai porte un moyen de dégivrage fonctionnant par émission laser ou par infrarouge. Le moyen de dégivrage peut alternativement comprendre un inducteur, ou un commutateur électrique.

Dès lors, le constructeur divise le secteur angulaire total 100 en une pluralité de secteurs angulaires restreints, et notamment en six secteurs angulaires restreints 104, 105, 106, 107, 108, 109. distincts selon l'exemple. Plus particulièrement, le secteur angulaire total 100 s'étend angulairement et de bas en haut selon une direction en élévation du parebrise 10 d'un premier secteur angulaire restreint 104 inférieur vers un dernier secteur angulaire restreint supérieur 109

Chaque secteur angulaire restreint 104, 105, 106, 107, 108, 109 définit alors une zone de dégivrage 24, 25, 26, 27, 28, 29.

Durant une étape de dégivrage, l'unité de contrôle 55 active l'essuie-glace pour balayer non pas le secteur angulaire total, mais un seul secteur angulaire restreint 104, 105, 106, 107, 108,-109 à la fois. Par exemple, l'unité de contrôle requiert le dégivrage successif des secteurs angulaires restreints selon un cycle prédéterminé en commençant par le premier secteur angulaire restreint inférieur 104 et en continuant par le secteur adjacent jusqu'au dernier secteur angulaire restreint supérieur 109. Par suite, le moyen de dégivrage dégivre le premier secteur angulaire restreint 104, puis successivement le deuxième secteur angulaire restreint 105, le troisième secteur angulaire restreint 106, le quatrième secteur angulaire restreint 107, le cinquième secteur angulaire restreint 108, pour finir par le dernier secteur angulaire restreint 109.

Selon la réalisation de la figure 4, le dispositif de traitement du givre 30 comporte au moins deux moyens de dégivrage 41, 42, 43 respectivement pour dégivrer deux zones de dégivrage 21, 22, 23 distinctes. Par exemple, le dispositif 30 comporte au moins deux des moyens suivants : un moyen de dégivrage frontal, un moyen de dégivrage latéral et un moyen de dégivrage inférieur.

Durant l'étape de dégivrage, l'unité de contrôle 55 active alors un unique moyen de dégivrage à la fois pour décoller le givre sur la zone de dégivrage correspondante. Suite à l'activation d'un moyen de dégivrage et avant l'activation éventuelle d'un autre moyen de dégivrage, l'unité de contrôle 55 sollicite le balayage de l'essuie-glace 50 pour évacuer le givre décollé. L'unité de contrôle 55 peut requérir le balayage de l'essuie-glace 55 à partir d'une température seuil.

Chaque zone de dégivrage peut avoir une forme déterminée par le chemin parcouru par l'essuie-glace, afin d'éviter le balayage concomitant d'une zone dégivrée et d'une zone non dégivrée par un même essuie-glace.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé de traitement du givre pour une verrière (300) d'un aéronef (1) comportant au moins un parebrise (10),
au cours duquel :
- on définit au moins deux zones de dégivrage (20) distinctes du parebrise (10),
- durant une étape de dégivrage, on active temporairement au moins un moyen de dégivrage (40) pour dégivrer lesdites zones de dégivrage (20) successivement et selon un cycle donné d'importance pour la visibilité offerte à un équipage.

2. Procédé selon la revendication 1,
**caractérisé en ce que** l'étape de dégivrage est mise en oeuvre lorsque l'aéronef (1) ne vole plus dans des conditions givrantes ou sur requête d'un pilote.

3. Procédé selon l'une quelconque des revendications 1 à 2,
**caractérisé en ce que**, ledit aéronef (1) s'étendant longitudinalement d'une extrémité avant (4) vers une extrémité arrière (5), on définit sur au moins un parebrise au moins une zone de dégivrage dite « zone frontale (21) » allouant à un pilote une visibilité vers l'avant de l'aéronef.

4. Procédé selon l'une quelconque des revendications 1 à 3,
**caractérisé en ce que**, ledit aéronef (1) s'étendant latéralement d'un côté gauche (9) vers un côté droit (8) et en élévation d'une portion basse (6) vers une portion haute (7), on définit sur au moins un parebrise au moins une zone de dégivrage dite «zone latérale (22) » allouant à un pilote une visibilité vers un côté de l'aéronef et / ou au moins une zone de dégivrage dite « zone basse (23) » allouant à un pilote une visibilité vers le bas de l'aéronef.

5. Procédé selon l'une quelconque des revendications 1 à 2,
**caractérisé en ce que**, ledit aéronef (1) comportant un essuie-glace (50) pouvant balayer un secteur angulaire total (100) prédéterminé, on divise ledit secteur angulaire total (100) en une pluralité de secteurs angulaires restreints (104-109) distincts définissant chacun une zone de dégivrage (24-29).

6. Dispositif de traitement du givre (30) d'une verrière (300) d'un aéronef (1) comportant au moins un parebrise (10),
**caractérisé en ce que**, ledit parebrise (10) comportant au moins deux zones de dégivrage (20) distinctes, ledit dispositif de traitement du givre (30) comporte au moins un moyen de dégivrage (40) et un système (35) de détection de givre, ledit dispositif de traitement du givre (30) ayant une unité de contrôle (55) communiquant avec ledit moyen de dégivrage (40) pour dégivrer lesdites au moins deux zones de dégivrage (20) successivement et selon un cycle donné d'importance pour la visibilité offerte à un équipage en appliquant le procédé selon l'une quelconque des revendications 1 à 5.

7. Dispositif selon la revendication 6,
**caractérisé en ce que** le dispositif de traitement du givre (30) comporte au moins deux moyens de dégivrage (41, 42, 43) respectivement pour dégivrer des zones de dégivrage (20) distinctes, ladite unité de contrôle (55) activant les deux moyens de dégivrage (41, 42, 43) l'un après l'autre.

8. Dispositif selon la revendication 7,
**caractérisé en ce que**, ledit aéronef (1) s'étendant longitudinalement d'une extrémité avant (4) vers une extrémité arrière (5), lesdits au moins deux moyens de dégivrage (40) comportent au moins un moyen de dégivrage frontal (41) disposé au niveau d'une zone de dégivrage dite « zone frontale (21) »d'au moins un parebrise allouant à un pilote une visibilité vers l'avant de l'aéronef, l'unité de contrôle (55) activant en premier lieu ce moyen de dégivrage frontal (41) en cas de détection de givre.

9. Dispositif selon l'une quelconque des revendications 6 à 8,
**caractérisé en ce que**, ledit aéronef (1) s'étendant latéralement d'un côté gauche (9) vers un côté droit (8) et en élévation d'une portion basse (6) vers une portion haute (7), au moins deux moyens de dégivrage (40) comportent au moins un moyen de dégivrage latéral (42) disposé au niveau d'une zone de dégivrage dite «zone latérale (22) » d'au moins un parebrise allouant à un pilote une visibilité vers un côté de l'aéronef et / ou au moins un moyen de dégivrage inférieur (43) disposé au niveau d'une zone de dégivrage dite « zone basse (23) » d'au moins un parebrise allouant à un pilote une visibilité vers le bas de l'aéronef.

10. Dispositif selon la revendication 6,
**caractérisé en ce que** ledit dispositif de traitement du givre (30) comporte un essuie-glace (50) portant un moyen de dégivrage (44), ledit essuie-glace (50) pouvant balayer un secteur angulaire total (100) prédéterminé, ledit secteur angulaire total (100) incluant une pluralité de secteurs angulaires restreints (104-109) distincts définissant chacun une zone de dégivrage (20), ladite unité de contrôle (55) activant ledit essuie-glace pour balayer un seul secteur angulaire restreint (104-109) à la fois afin de dégivrer partiellement ledit parebrise (10).

11. Dispositif selon la revendication 10,
**caractérisé en ce que** ledit secteur angulaire total (100) s'étendant angulairement et de bas en haut selon une direction en élévation du parebrise (10) d'un premier secteur angulaire restreint (104) inférieur vers un dernier secteur angulaire restreint supérieur (109), ladite unité de contrôle requiert le dégivrage successif des secteurs angulaires restreints selon un cycle prédéterminé en commençant par le premier secteur angulaire restreint inférieur (104) pour finir par le dernier secteur angulaire restreint supérieur (109).

12. Dispositif selon la revendication 6,
**caractérisé en ce que** ledit dispositif de traitement du givre (30) comporte au moins deux moyens de dégivrage (41, 42, 43) respectivement pour dégivrer deux zones de dégivrage (21, 22, 23) distinctes, ladite unité de contrôle (55) activant en présence de givre un unique moyen de dégivrage à la fois pour décoller le givre et requérant le balayage d'un essuie-glace (50) pour évacuer le givre décollé.

13. Dispositif selon la revendication 12,
**caractérisé en ce que** ledit dispositif de traitement du givre (30) comporte un système (60) de mesure de la température, ladite unité de contrôle (55) requérant le balayage dudit essuie-glace (55) pour évacuer le givre décollé à partir d'une température seuil.

14. Dispositif selon l'une quelconque des revendications 6 à 13,
**caractérisé en ce que** ledit dispositif de traitement du givre (30) comporte un organe de sélection (70) relié à l'unité de contrôle (55) et manipulable par un individu pour définir ledit cycle donné.

15. Aéronef (1) muni d'au moins un parebrise (10),
**caractérisé en ce que** ledit aéronef (1) comporte un dispositif de traitement du givre (30) selon l'une quelconque des revendications 6 à 14.

## Patentansprüche

1. Verfahren zur Frostbehandlung für eine Verglasung (300) eines Luftfahrzeugs (1) mit mindestens einer Windschutzscheibe (10), bei dem:
- mindestens zwei getrennte Enteisungsbereiche (20) der Windschutzscheibe (10) definiert werden,
- während eines Enteisungsschritts zeitweise mindestens ein Enteisungsmittel (40) aktiviert wird, um die Enteisungsbereiche (20) nacheinander und gemäß einem vorgegebenen Wichtigkeitszyklus bezüglich der einer Mannschaft gegebenen Sicht zu enteisen.

2. Verfahren nach Anspruch 1,
**dadurch gekennzeichnet, dass** der Enteisungsschritt ausgeführt wird, wenn das Luftfahrzeug (1) nicht mehr unter Vereisungsbedingungen fliegt oder auf Befehl eines Piloten.

3. Verfahren nach einem der Ansprüche 1 bis 2,
**dadurch gekennzeichnet, dass** das Luftfahrzeug (1) sich in Längsrichtung von einem vorderen Ende (4) zu einem hinteren Ende (5) erstreckt, wobei man auf mindestens einer Windschutzscheibe mindestens einen Enteisungsbereich, genannt "stirnseitiger Bereich (21)" definiert, der einem Piloten eine Sicht nach vorne aus dem Luftfahrzeug gewährt.

4. Verfahren nach einem der Ansprüche 1 bis 3,
**dadurch gekennzeichnet, dass** das Luftfahrzeug (1) sich seitlich von einer linken Seite (9) zu einer rechten Seite (8) erstreckt und in der Höhe von einem unteren Bereich (6) zu einem oberen Bereich (7), wobei auf mindestens einer Windschutzscheibe mindestens ein Enteisungsbereich, genannt "seitlicher Bereich (22)" definiert wird, der einem Piloten eine Sicht seitlich aus dem Luftfahrzeug gewährt und/oder mindestens ein Enteisungsbereich, genannt "unterer Bereich (23)" definiert wird, der einem Piloten eine Sicht aus dem Luftfahrzeug nach unten gewährt.

5. Verfahren nach einem der Ansprüche 1 bis 2,
**dadurch gekennzeichnet, dass** das Luftfahrzeug (1) einen Scheibenwischer (50) aufweist, der einen vorbestimmten Gesamtwinkelabschnitt (100) überstreichen kann, wobei man den Gesamtwinkelabschnitt (100) in eine Mehrzahl getrennter, begrenzter Winkelabschnitte (104-109) unterteilt, die jeweils einen Enteisungsbereich (24-29) definieren.

6. Vorrichtung (30) zur Frostbehandlung einer Verglasung (300) eines Luftfahrzeugs (1) mit mindestens einer Windschutzscheibe (10),
**dadurch gekennzeichnet, dass** die Windschutzscheibe (10) mindestens zwei getrennte Enteisungsbereiche (20) aufweist, wobei die Vorrichtung (30) zur Frostbehandlung mindestens ein Enteisungsmittel (40) und ein System (35) zur Vereisungserfassung aufweist, wobei die Vorrichtung zur Frostbehandlung (30) eine Steuereinheit (55) aufweist, die mit dem Enteisungsmittel (40) kommuniziert, um die mindestens zwei Enteisungsbereiche (20) nacheinander und gemäß einem vorgegebenen Zyklus der Wichtigkeit für die einer Mannschaft gewährten Sicht zu enteisen durch Anwendung des Verfahrens nach einem der Ansprüche 1 bis 5.

7. Vorrichtung nach Anspruch 6,
**dadurch gekennzeichnet, dass** die Vorrichtung zur Frostbehandlung (30) mindestens zwei Enteisungsmittel (41, 42, 43) aufweist, die jeweils zur Enteisung von getrennten Enteisungsbereichen (20) vorgesehen sind, wobei die Steuereinheit (55) die zwei Enteisungsmittel (41, 42, 43) eins nach dem anderen aktiviert.

8. Vorrichtung nach Anspruch 7,
**dadurch gekennzeichnet, dass** das Luftfahrzeug (1) sich in Längsrichtung von einem vorderen Ende (4) zu einem hinteren Ende (5) erstreckt, wobei die mindestens zwei Enteisungsmittel (40) mindestens ein stirnseitige Enteisungsmittel (41) aufweisen, das auf der Höhe eines Enteisungsbereichs, genannt "stirnseitiger Bereich (21)", mindestens einer Windschutzscheibe angeordnet ist, der einem Piloten eine Sicht aus dem Luftfahrzeug nach vorne gewährt, wobei die Steuereinheit (55) im Fall der Erfassung einer Vereisung dieses stirnseitige Enteisungsmittel (41) zuerst aktiviert.

9. Vorrichtung nach einem der Ansprüche 6 bis 8,
**dadurch gekennzeichnet, dass** das Luftfahrzeug (1) sich seitlich von einer linken Seite (9) zu einer rechten Seite (8) und in der Höhe von einem unteren Bereich (6) zu einem oberen Bereich (7) erstreckt, wobei mindestens zwei Enteisungsmittel (40) mindestens ein seitliches Enteisungsmittel (42) aufweisen, das auf der Höhe eines Enteisungsbereichs, genannt "seitlicher Bereich (22)", mindestens einer Windschutzscheibe angeordnet ist, der einem Piloten eine Sicht seitlich aus dem Luftfahrzeug gewährt, und/oder mindestens ein unteres Enteisungsmittel (43), das auf der Höhe eines Enteisungsbereichs, genannt "unterer Bereich (23)", mindestens einer Windschutzscheibe angeordnet ist, der einem Piloten eine Sicht aus dem Luftfahrzeug nach unten gewährt.

10. Vorrichtung nach Anspruch 6,
**dadurch gekennzeichnet, dass** die Vorrichtung zur Frostbehandlung (30) einen Scheibenwischer (50) aufweist, der ein Enteisungsmittel (44) trägt, wobei der Scheibenwischer (50) einen vorbestimmten Gesamtwinkelabschnitt überstreichen kann, wobei der Gesamtwinkelabschnitt (100) eine Mehrzahl getrennter begrenzter Winkelabschnitte (104-109) umfasst, die jeweils einen Enteisungsbereich (20) definieren, wobei die Steuereinheit (55) den Scheibenwischer aktiviert, um einen einzigen begrenzten Winkelabschnitt (104-109) gleichzeitig zu überstreichen, um die Windschutzscheibe (10) teilweise zu enteisen.

11. Vorrichtung nach Anspruch 10,
**dadurch gekennzeichnet, dass** der Gesamtwinkelabschnitt (100) sich winkelmäßig von unten nach oben in einer Höhenrichtung der Windschutzscheibe (10) von einem ersten, unteren begrenzten Winkelabschnitt (104) zu einem letzten, oberen begrenzten Winkelabschnitt (109) erstreckt, wobei die Steuereinheit die aufeinanderfolgende Enteisung von begrenzten Winkelabschnitten gemäß einem vorbestimmten Zyklus fordert, beginnend bei dem ersten, unteren begrenzten Winkelabschnitt (104), um bei dem letzten, oberen begrenzten Winkelabschnitt (109) zu enden.

12. Vorrichtung nach Anspruch 6,
**dadurch gekennzeichnet, dass** die Vorrichtung zur Frostbehandlung (30) mindestens zwei Enteisungsmittel (41, 42, 43) aufweist, jeweils zum Enteisen zweier getrennter Enteisungsbereiche (21, 22, 23), wobei die Steuereinheit (55) bei der Anwesenheit einer Vereisung ein einziges Vereisungsmittel gleichzeitig aktiviert, um die Vereisung abzulösen und das Wischen eines Scheibenwischers (50) anfordert, um das abgelöste Eis zu entfernen.

13. Vorrichtung nach Anspruch 12,
**dadurch gekennzeichnet, dass** die Vorrichtung zur Frostbehandlung (30) ein System (60) zur Messung der Temperatur aufweist, wobei die Steuereinheit (55) das Wischen des Scheibenwischers (55) verlangt, um das abgelöste Eis ab einer Schwellentemperatur zu entfernen.

14. Vorrichtung nach einem der Ansprüche 6 bis 13,
**dadurch gekennzeichnet, dass** die Vorrichtung (30) zur Frostbehandlung ein Auswahlorgan (70) aufweist, das mit der Steuereinheit (55) verbunden list, und durch eine Person betätigbar ist, um den gegebenen Zyklus zu defnieren.

15. Luftfahrzeug (1) mit mindestens einer Windschutzscheibe (10),
**dadurch gekennzeichnet, dass** das Luftfahrzeug (1) eine Vorrichtung zur Frostbehandlung (30) nach einem der Ansprüche 6 bis 14 aufweist.

## Claims

1. Frost treatment method for a canopy (300) of an aircraft (1) comprising at least one windscreen (10),
in which method:
- at least two distinct defrosting zones (20) of the windscreen (10) are defined,
- during a defrosting step, at least one defrosting means (40) is temporarily activated to defrost said defrosting zones (20) successively and according to a given cycle of importance for the visibility made available to a crew.

2. Method according to claim 1,
**characterised in that** the defrosting step is performed when the aircraft (1) is no longer flying in frosting conditions or at the request of a pilot.

3. Method according to any one of claims 1 to 2,
**characterised in that**, said aircraft (1) extending longitudinally from a front end (4) towards a rear end (5), at least one defrosting zone called a "frontal zone (21)" is defined on at least one windscreen, giving a pilot visibility towards the front of the aircraft.

4. Method according to any one of claims 1 to 3,
**characterised in that**, said aircraft (1) extending laterally from a left side (9) towards a right side (8) and in elevation from a low portion (6) towards a high portion (7), at least one defrosting zone called a "lateral zone (22)" is defined on at least one windscreen, giving a pilot visibility towards one side of the aircraft and/or at least one defrosting zone called a "low zone (23)", giving a pilot visibility towards the bottom of the aircraft.

5. Method according to any one of claims 1 to 2,
**characterised in that**, said aircraft (1) comprising a windscreen wiper (50) capable of wiping a predetermined total angular sector (100), said total angular sector (100) is divided into a plurality of distinct confined angular sectors (104-109) each defining a defrosting zone (24-29).

6. Frost treatment device (30) for a canopy (300) of an aircraft (1) comprising at least one windscreen (10),
**characterised in that**, said windscreen (10) comprising at least two distinct defrosting zones (20), said frost treatment device (30) comprises at least one defrosting means (40) and a frost detection system (35), said frost treatment device (30) having a control unit (55) communicating with said defrosting means (40) to defrost said at least two defrosting zones (20) successively and according to a given cycle of importance for the visibility made available to a crew by applying the method according to any one of claims 1 to 5.

7. Device according to claim 6,
**characterised in that** the frost treatment device (30) comprises at least two defrosting means (41, 42, 43) respectively for defrosting distinct defrosting zones (20), said control unit (55) activating the two defrosting means (41, 42, 43) one after the other.

8. Device according to claim 7,
**characterised in that**, said aircraft (1) extending longitudinally from a front end (4) towards a rear end (5), said at least two defrosting means (40) comprise at least one frontal defrosting means (41) arranged at the level of a defrosting zone called a "frontal zone (21)" of at least one windscreen, giving a pilot visibility towards the front of the aircraft, the control unit (55) activating firstly this frontal defrosting means (41) in the event of detection of frost.

9. Device according to any one of claims 6 to 8,
**characterised in that**, said aircraft (1) extending laterally from a left side (9) towards a right side (8) and in elevation from a low portion (6) towards a high portion (7), at least two defrosting means (40) comprise at least one lateral defrosting means (42) arranged at the level of a defrosting zone called a "lateral zone (22)" of at least one windscreen, giving a pilot visibility towards one side of the aircraft and/or at least one bottom defrosting means (43) arranged at the level of a defrosting zone called a "low zone (23)" of at least one windscreen, giving a pilot visibility towards the bottom of the aircraft.

10. Device according to claim 6,
**characterised in that** said frost treatment device (30) comprises a windscreen wiper (50) carrying a defrosting means (44), said windscreen wiper (50) being capable of wiping a predetermined total angular sector (100), said total angular sector (100) including a plurality of distinct confined angular sectors (104-109) each defining a defrosting zone (20), said control unit (55) activating said windscreen wiper to wipe only one confined angular sector (104-109) at a time in order to partially defrost said windscreen (10).

11. Device according to claim 10,
**characterised in that** said total angular sector (100) extending angularly and upwards in an elevation direction of the windscreen (10) from a bottom first confined angular sector (104) towards a top last confined angular sector (109), said control unit demands the successive defrosting of the confined angular sectors according to a predetermined cycle beginning with the bottom first confined angular sector (104) and ending with the top last confined angular sector (109).

12. Device according to claim 6,
**characterised in that** said frost treatment device (30) comprises at least two defrosting means (41, 42, 43) respectively for defrosting two distinct defrosting zones (21, 22, 23), said control unit (55) activating in the presence of frost only one defrosting means at a time in order to unstick the frost and demanding the wiping of a windscreen wiper (50) in order to remove the unstuck frost.

13. Device according to claim 12,
**characterised in that** said frost treatment device (30) comprises a temperature measurement system (60), said control unit (55) demanding the wiping of said windscreen wiper (55) in order to remove the unstuck frost starting from a threshold temperature.

14. Device according to any one of claims 6 to 13,
**characterised in that** said frost treatment device (30) comprises a selection member (70) connected to the control unit (55) and operable by an individual in order to define said given cycle.

15. Aircraft (1) provided with at least one windscreen (10),
**characterised in that** said aircraft (1) comprises a frost treatment device (30) according to any one of claims 6 to 14.
